Europäisches Patentamt

European Patent Office

Office européen des brevets

(11) Publication number: **0 062 476**
A1

# (12) EUROPEAN PATENT APPLICATION

(21) Application number: 82301649.8

(22) Date of filing: 29.03.82

(51) Int. Cl.³: **B 60 T 13/58,** F 16 D 57/00

(30) Priority: 02.04.81 GB 8110410

(43) Date of publication of application: 13.10.82
Bulletin 82/41

(84) Designated Contracting States: **AT BE CH DE FR IT LI
NL SE**

(71) Applicant: **WESTINGHOUSE BRAKE AND SIGNAL
COMPANY LIMITED, Foundry Lane, Chippenham
Wiltshire SN15 1RT (GB)**

(72) Inventor: **Romain, Norman Robert Westinghouse Brakes,
Westinghouse Brake and Signal Co. Ltd. P.O. Box 74,
New Road Chippenham, Wilts., SN15 1HY (GB)**

(74) Representative: **Page, Edmund John, PAGE & CO P.O.
Box 113 Foundry Lane, Chippenham Wiltshire SN15 1EW
(GB)**

(54) **A selector valve.**

㊼ A selector valve (4) which automatically cutsoff the
flooded vent line (6, 7) from the inoperative chamber of a hy-
dro-kinetic brake comprises two self-sealing ball valves (9, 10),
one in each vent line. A balance beam (15) extends between
the two valves (9, 10) so that the first to close tips the beam
(15) towards the other valve preventing it from sealing. A com-
mon passage (17) leads from these two valves (9, 10) to an at-
mospheric vent port (24) closable by a third ball-valve (22, 23)
and a connection (8) to a pressure actuated friction brake sys-
tem. When the second vent line floods the third valve (22, 23)
seals the vent port (24) permitting pressure to build up in the
friction brake system.

EP 0 062 476 A1

## A Selector Valve

The invention relates to selector valves and more particularly to valves for automatically selecting the operative vent line of a hydro-kinetic brake.

A hydro-kinetic brake includes forward and reverse motion braking rotors connected to a vehicle axle and housed in toroidal chambers normally vented to atmosphere through respective vent lines. When the brake is brought into operation liquid, e.g. a water-glycol mixture, is injected under pressure into the chambers against the brake rotors to produce a braking effort. As each brake rotor is effective in only one direction of rotation, corresponding to forward and reverse movement of the vehicle, upon actuation the chamber containing the ineffective rotor immediately begins to flood. Almost immediately the corresponding vent line also floods whilst the vent line from the operative chamber remains open to atmosphere. In order to prevent loss of liquid through the flooded vent line it is normally closed by a liquid retaining valve. In common with other forms of dynamic brake the efficiency of a hydro-kinetic brake decreases as the vehicle speed and hence rotor speed falls. To compensate for this decreasing braking effort the vent lines are also interconnected to a pressure responsive control unit of a friction brake system through a selector valve. As the vehicle speed falls the operative vent line also floods and the increasing hydraulic pressure in this line is used to bring the friction brake system into operation. In order to prevent loss of liquid from this vent line also a further liquid retaining valve is normally used to close the vent to atmosphere. The selector valve is normally switched to connect the appropriate vent line to the friction brake control unit in order to prevent a false actuation of the friction brake by the ineffective hydro-kinetic brake as soon as the corresponding rotor chamber begins to flood.

In a known form of hydro-kinetic brake system the selector valve comprises a spool valve in which a spool is slideable between alternative positions in which one or the other of the vent line is connected to the friction brake control unit by means of a control pressure acting on one end of the valve spool in opposition to a bias force.

In a spool valve of this kind the seating surfaces of the spool are in sliding contact with the walls of the valve chamber. As the liquid which reaches the spool valve has previously been injected at high pressure into one of the hydro-kinetic braking chambers it carries with it a considerable amount of debris scoured from the surfaces of the chamber and the rotor. This debris can damage the sliding seal surfaces of the spool valve giving rise to considerable difficulty in maintaining, in service, the high performance necessary for efficient working of a hydro-kinetic brake system.

The present invention is intended to overcome these difficulties by dispensing with sliding seal surfaces in the vent line selector valve. It is also an object of the invention to provide a selector valve which is automatic in operation. A still further object of the invention is to combine the vent line selector valve and water retaining valves in one valve body.

According to the invention there is provided a selector valve comprising a body two inlets communicating with a common outlet through respective valve arrangements having a floating valve member operable under pressure at the inlet to a seated position closing-off the inlet and a pivotally mounted beam extending between the valve members such that the first valve to close engages the beam tipping it towards the second valve such as to prevent its subsequent closure and to maintain communication between the second inlet and the outlet.

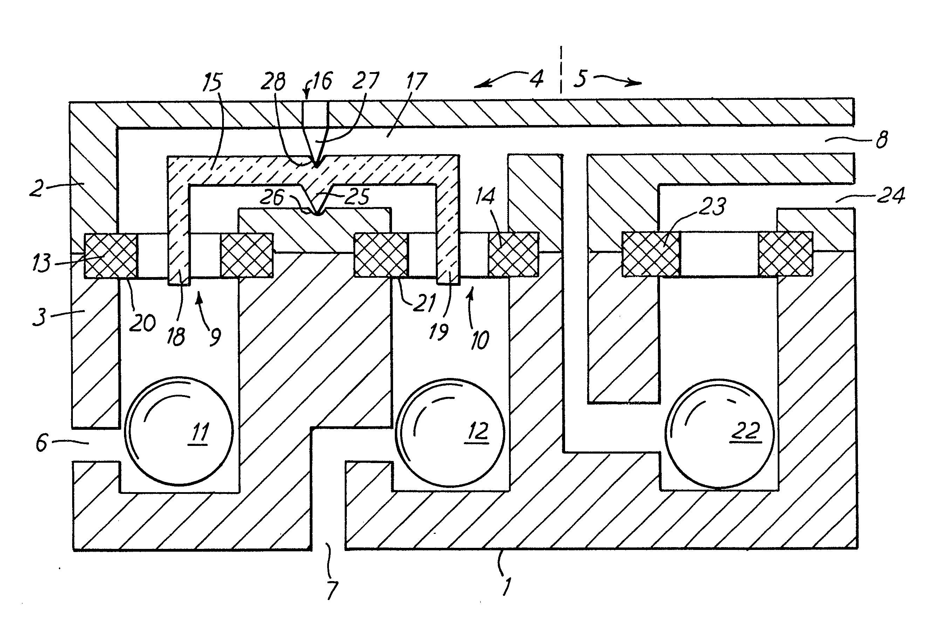

For a better understanding of the present invention and to show how the same may be carried into effect, reference will now be made, by way of example, to the accompanying drawing, which shows in diagrammatic cross-section a selector valve which includes a liquid retaining valve between the valve outlet and an atmospheric vent port.

Referring to the drawing, the selector valve body 1 consists of a two part 2, 3 aluminium casting. The valve 1 may be notionally divided into two functional

- 4 -

0062476

sections comprising a selector valve section 4 on the left of the drawing and a liquid retaining valve section 5 on the right of the drawing.

The selector valve section 4 has two inlets 6, 7 which communicate with a common outlet 8 through respective valve arrangements 9, 10 having floating ball valve members 11, 12 operable under pressure at the inlets 6, 7 to seat against resilient annular valve seats 13,14 to close-off the respective inlets 6, 7 from the common outlet 8. A beam 15 is pivoted at 16 in the passage way 17 between the two valves leading to the common outlet 8. The ends 18, 19 of the beam 15 are adapted to extend slightly below the sealing faces 20, 21 of the valve seats 13, 14 so as to be capable of engaging the floating valve members 11, 12 respectively. In section 5 the liquid retaining valve consists of a further floating ball valve member 22 operable under pressure in the common outlet 8 to engage a further resilient annular valve seat 23 to close-off the common outlet 8 from atmospheric vent port 24.

In a hydro-kinetic brake system of the type referred to the inlets 6, 7 are connected to the vent lines of the hydro-kinetic brake chambers, the common outlet 8 is connected to a pressure responsive control unit of a friction braking system and, the port 24 is connected to atmosphere.

In operation, one of the two inlets, say inlet 6, floods first and lifts the floating valve member 11 into engagement with valve seat 13 in which position it engages the end 18 of the beam 15 tipping it about its pivot 16 so that the opposite end 19 extends further below lower face 21 of valve seat 14. The closing of valve 9 prevents liquid entering the passage way 17 and reaching either the common outlet 8 or the liquid retaining valve of section 5. During the period before inlet 7 also floods the valve 10 remains open so that the vent line connected to inlet 7 remains vented to atmosphere via the valve 10, 5 and the vent port 24.

When inlet 7 also floods the floating valve member 12 is lifted into engagement with the end 19 of beam 15 but is prevented from engaging valve seat 14 by the biassed position of beam 15. Thus liquid now enters passage way 17 and begins to flood the common outlet 8 and the liquid retaining valve 5. In similar manner to valves 9, 10 the floating valve member 22 of the liquid retaining valve is raised into engagement with valve seat 23 to close-off the atmospheric vent port 24. With vent port 24 now closed liquid pressure in common outlet 8 is able to build up and bring the friction braking system into operation.

In the drawing the pivot arrangement for beam 15 comprises a raised knife edge 25 on one side of the beam engaged with a recessed slot 26 formed in a wall of the valve body casting. On the opposite side of the beam a similar knife edged backstop 27 engages with a recessed slot 28 in beam 15. The backstop 27 may be screw adjustable in the wall of the casting 2 in order that a degree of free movement may be allowed in the pivot to permit free rocking movement of the beam 15. In an alternative pivot arrangement the beam 15 is mounted by means of a pivot pin in the forked end of an adjustable forked supporting member in place of backstop 27. Preferably the pivot pin is a loose fit in the forked end in order to provide free rocking movement of the beam.

It is preferred to form the floating valve members 11, 12 and 22 and the beam 15 from inert plastics material in order to provide a valve having long life. For the valve members polypropylene is a suitable inert plastics material for use with the water/glycol mixture referred to above, and for the beam 15 which requires a material capable of providing a more rigid construction material such as MAKRALON or DELRIN are suitable. The valve seats 13, 14 and 23 are preferably formed of a resilient rubber material the composition of which is also suitable for use with the water/glycol mixture.

CLAIMS:

1.  A selector valve comprising a body having two inlets (6, 7) communicating with a common outlet (8, 24) through respective valve arrangements (9, 10) having a floating valve member (11, 12) operable under pressure at the inlet (6, 7) to a seated position closing-off the inlet characterised by a pivotally mounted beam (15) extending between the valve members (11, 12) such that the first valve to close engages the beam (15) tipping it towards the second valve such as to prevent its subsequent closure and to maintain communication between the second inlet and the outlet (17).

2.  A selector valve according to Claim 1 characterised in that the beam (15) is pivotally mounted in  a communicating passage (17) between the valves (9, 10) and the common outlet (8, 24).

3.  A selector valve according to Claim 1 or Claim 2 characterised in that the beam (15) is pivotally mounted by means of a rocking knife edge (25) on one side and a knife edge backstop (27) engaged with a slot (28) on the opposite side of the beam (15).

4.   A selector valve according to Claim 3 characterised
in that the knife edge backstop (27) is screw
adjustable in the valve body (2).

5.   A selector valve according to Claim 1 or
Claim 2 characterised in that the beam (15) is
pivotally mounted by means of pivot pin located
in the forked end of a .forked supporting member.

6.   A selector valve according to Claim 5
characterised in that the forked supporting member
is screw adjustable in the valve body (2).

7.   A selector valve according to any preceding
Claim characterised in that the common outlet
(8, 24) is vented (24) to atmosphere through a
liquid retaining valve arrangement (22, 23) having
a floating valve member (22).

8.   A selector valve according to any preceding
Claim characterised in that a floating valve
arrangement (9, 10, 22, 23) comprises a floating
ball valve member (11, 12, 22) sealingly engageable
with an annular valve seat (13, 14, 23).

0062476

9.   A selector valve according to Claim 8
characterised in that the ball valve members
(11, 12, 22) are formed of plastics material
and the valve seat (13, 14, 23) is formed of
resilient rubber material.


10. A vehicle hydro-kinetic brake system characterised
by a vent line selector valve according to any
preceding claim.

# European Patent Office

## EUROPEAN SEARCH REPORT

Application number

EP 82 30 1649

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR - A - 2 057 026 (VOITH) | | B 60 T 13/58 |
| A | US - A - 3 900 230 (DURLING) | | F 16 D 57/00 |
| A | FR - A - 1 559 013 (DBA) | | |
| A | FR - A - 1 047 067 (SEMENITZ) | | |
| A | US - A - 2 058 595 ( KLEIN) | | |

-------

|  |  |  | TECHNICAL FIELDS SEARCHED (Int. Cl. 3) |
|---|---|---|---|
|  |  |  | B 60 T 1/08, 11/10, 11/32, 13/58, 15/02, 15/36, 17/18 |
|  |  |  | F 16 D 57/00, 57/04 |
|  |  |  | F 16 K 31/36 |

The present search report has been drawn up for all claims

| Place of search | Date of completion of the search | Examiner |
|---|---|---|
| The Hague | 17.06.1982 | HARTEVELD |